(19) Europäisches Patentamt
European Patent Office
Office européen des brevets

(11) **EP 3 124 205 B1**

(12) **EUROPEAN PATENT SPECIFICATION**

(45) Date of publication and mention
of the grant of the patent:
**21.04.2021 Bulletin 2021/16**

(51) Int Cl.:
***B29C 55/12*** (2006.01)          ***B32B 15/085*** (2006.01)
***C08J 5/18*** (2006.01)          ***H01G 4/18*** (2006.01)

(21) Application number: **15768570.2**

(86) International application number:
**PCT/JP2015/058698**

(22) Date of filing: **23.03.2015**

(87) International publication number:
**WO 2015/146893 (01.10.2015 Gazette 2015/39)**

(54) **BIAXIALLY ORIENTED POLYPROPYLENE FILM**

BIAXIAL AUSGERICHTETE POLYPROPYLENFOLIE

FILM DE POLYPROPYLÈNE BI-ORIENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2014 JP 2014067694**

(43) Date of publication of application:
**01.02.2017 Bulletin 2017/05**

(73) Proprietor: **Toray Industries, Inc.**
**Tokyo 103-8666 (JP)**

(72) Inventors:
• **OKADA, Kazuma**
Otsu-shi
Shiga 520-8558 (JP)
• **IMANISHI, Yasuyuki**
Otsu-shi
Shiga 520-8558 (JP)
• **KUMA, Takuya**
Otsu-shi
Shiga 520-8558 (JP)
• **OHKURA, Masatoshi**
Otsu-shi
Shiga 520-8558 (JP)

(74) Representative: **Mewburn Ellis LLP**
**Aurora Building**
**Counterslip**
**Bristol BS1 6BX (GB)**

(56) References cited:
| | |
|---|---|
| EP-A1- 2 590 191 | EP-A1- 2 684 676 |
| EP-A1- 2 832 776 | JP-A- H0 750 224 |
| JP-A- H1 167 580 | JP-A- S57 195 624 |
| JP-A- 2001 081 221 | JP-A- 2009 088 492 |
| JP-A- 2011 051 330 | JP-A- 2011 073 276 |
| US-A1- 2003 108 775 | US-A1- 2009 186 280 |
| US-A1- 2011 236 762 | US-A1- 2012 015 229 |

**Description**

TECHNICAL FIELD

The present invention relates to a biaxially oriented polypropylene film suitable for use in packagings and industrial applications, and more particularly to a biaxially oriented polypropylene film which is capable of maintaining high voltage resistance and reliability even under a high-temperature environment as a dielectric material for capacitors and which is suitable for use in capacitors.

BACKGROUND ART

Biaxially oriented polypropylene films are excellent in transparency, mechanical characteristics, electrical characteristics and so on, and are therefore used in various applications such as packaging applications, tape applications, and electrical applications including cable wrappings and capacitors.

Among them, biaxially oriented polypropylene films for use in capacitors have an excellent voltage resistance characteristic and low-loss characteristic, and are therefore particularly preferably used for high-voltage capacitors in both direct-current and alternating-current applications.

Recently, application of inverters to various kinds of electrical equipment has been progressed, and accordingly, demand for size reduction and capacity enlargement of capacitors has been further increased. In response to the demand in the market, especially in automobile applications (including hybrid car applications), and applications of solar power generation and wind power generation, it has become absolutely necessary to further reduce the thickness of biaxially oriented polypropylene films while improving the voltage resistance and maintaining productivity and processability thereof.

For example, Patent Documents 1 and 2 propose techniques in which the rigidity of a polypropylene film is regulated.

Patent Document 3 proposes a technique in which a film, the thermal shrinkage ratio and F5 value of which are each adjusted to a predetermined value, is subjected to metal vapor deposition, the metallized film is rolled to obtain an element, and the element is heat-pressed in vacuum to obtain a film for capacitors which has a reduced increase in tanδ in use at a high temperature.

Patent Document 4 proposes a technique in which polypropylene having a high isotactic pentad fraction is used, and the thermal shrinkage ratio, the F5 value and the surface roughness are each adjusted to a predetermined value to obtain a film for capacitors which is excellent in electrical characteristics and molding processability at a high temperature.

Patent Document 5 proposes a technique in which tetrakis[methylene-3(3,5-di-tertiary butyl-4-hydroxyphenyl)propionate]methane is added to polypropylene, and the thickness, the shrinkage ratio and the F5 value of the film are each adjusted to a predetermined value to obtain a film for capacitors which is excellent in handling characteristics and voltage resistance.

Patent Document 6 proposes a technique in which the temperature of a cooling roll and the draw ratios in the film longitudinal direction and width direction are each adjusted to a predetermined value to obtain a film for capacitors which is excellent in voltage resistance characteristic.

Patent Document 7 proposes a technique in which a polypropylene resin containing polybutene-1 and having a predetermined melting point is used, and the surface roughness and the gloss of the film are each adjusted to a predetermined value to obtain a film for capacitors which has a low thermal shrinkage ratio and exhibits excellent characteristics when used at a high voltage environment.

US2009/0186280 describes a microporous polyolefin film. A process for producing the microporous film and a nonaqueous electrolyte secondary battery using the film are also described.

JP 2001-081221 describes microporous films made from a mixture comprising a polyolefin and a plasticizer.

US2011/0236762 relates to porous membranes and methods of making them.

US2012/0015229 relates to a laminated separator including a first polyolefin microporous layer and a second (different) polyolefin microporous layer.

US2003/0108775 describes a biaxially oriented polyester film

EP 2 590 191 describes a biaxially oriented polypropylene film containing branched polypropylene.

Patent Document 1: JP H09-77882
Patent Document 2: JJP 2001-105553
Patent Document 3: JP H11-67580
Patent Document 4: JP H11-273990

Patent Document 5: WO 2004/084242
Patent Document 6: JP 2005-64067
Patent Document 7: JP 2007-169595

## SUMMARY OF THE INVENTION

### PROBLEMS TO BE SOLVED BY THE INVENTION

Particularly a biaxially oriented polypropylene film which is provided for use in capacitors is required to have increased rigidity in the surface of the film from the view point of voltage resistance, productivity and processability, and particularly for improving voltage resistance, it is important to increase the rigidity of the film.

However, rigidity cannot be sufficiently increased by using any of the techniques proposed in Patent Documents 1 and 2.

When the rigidity of a film is to be increased using any of the techniques proposed in Patent Documents 3 to 7, it is necessary to set a high draw ratio during film formation, so that productivity decreases due to breakage during film formation, or the thermal shrinkage ratio that is contradictory to rigidity of the film increases, and thus maintenance of the capacity and thermal dimensional stability of the capacitor under a high temperature in actual use are not sufficient.

Further, in response to demand for further increased heat resistance and voltage resistance of capacitors while process conditions require a higher temperature in preparation of capacitors, it is required to secure both thermal dimensional stability of the film and increased rigidity of the film.

Thus, the present inventors have extensively conducted studies for solving the above-described problems, and resultantly devised the present invention. The present invention provides a biaxially oriented polypropylene film which is capable of exhibiting excellent voltage resistance and reliability at a high temperature when used in high-voltage capacitors, and which has both increased rigidity and thermal dimensional stability suitable for use in the capacitors.

### SOLUTIONS TO THE PROBLEMS

The object described above can be achieved by the following means.

[1] A biaxially oriented polypropylene film in which the puncture strength of the film is 70 g/$\mu$m or more, the thermal shrinkage ratio in the film width direction in a heating treatment at 120°C for 15 minutes is 1.0% or less, the loss tangent at 23°C in the film width direction (tan$\delta$23) is 0.08 or less, and wherein the biaxially oriented polypropylene film contains branched polypropylene.

[2] The biaxially oriented polypropylene film according to [1], wherein the thermal shrinkage ratio in the film longitudinal direction in a heating treatment at 120°C for 15 minutes is 3% or less.

[3] The biaxially oriented polypropylene film according to [1] or [2], wherein the puncture elongation of the film is 2.0 mm or more.

[4] The biaxially oriented polypropylene film according to any one of [1] to [3], wherein the Young's modulus in the film width direction is 5.0 GPa or more.

[5] The biaxially oriented polypropylene film according to any one of [1] to [4], wherein the film thickness is not less than 0.5 $\mu$m and not more than 5 $\mu$m.

[6] A metal layer lamination film in which a metal layer is provided on at least one surface of the biaxially oriented polypropylene film according to any one of [1] to [5].

[7] A film capacitor which is produced using the metal layer lamination film according to [6].

### EFFECTS OF THE INVENTION

According to the present invention, there can be provided a biaxially oriented polypropylene film having both excellent thermal dimensional stability and increased rigidity, and the biaxially oriented polypropylene film can be used in various applications such as packaging applications, tape applications, and electrical applications including cable wrappings and capacitors, and is suitable particularly for use in capacitors, preferably for use in automobiles, solar power generation and wind power generation. Particularly, according to the present invention, there can be provided a biaxially oriented polypropylene film which exhibits excellent voltage resistance and reliability at a high temperature when used in high-voltage capacitors.

### EMBODIMENTS OF THE INVENTION

For a biaxially oriented polypropylene film according to the present invention, it is important that the puncture strength of the film is 70 g/$\mu$m or more. When the puncture strength is less than 70 g/$\mu$m, the voltage resistance of the film may be reduced, or a short-circuit may occur in case of ingress of foreign matters, and thus there is a possibility of causing capacity reduction and short-circuit breakage when the film is used as a capacitor. From the above-described point of view, the puncture strength of the film is more preferably 75 g/$\mu$m or more, further preferably 80 g/$\mu$m or more. The upper limit of the puncture strength is not particularly limited, but when the rigidity of the film is excessively high, flexibility may be impaired to deteriorate handling characteristics, and therefore the upper limit of the puncture strength is preferably 200 g/$\mu$m.

The present inventors have extensively conducted studies, and resultantly found that there is a high correlation between the puncture strength of the film and the voltage resistance characteristic of the capacitor at a high temperature, and it is important to perform control to increase the puncture strength of the film for improvement of high-temperature voltage resistance and reliability as capacitor characteristics. Here, as a method for performing control so that the puncture strength falls within a range as described above, for example, raw materials to be used, the draw ratios in the longitudinal direction and the width direction, and the stretching temperature are each controlled to fall within a range as described later, or in heat treatment and relaxation treatment steps after the film is biaxially stretched (biaxially oriented), the film is first heat-treated at a temperature lower than the stretching temperature in the width direction (first-stage heat treatment step), and the film is then heat-treated at a temperature higher than the above-mentioned treatment temperature and lower than the stretching temperature in the width direction during biaxial stretching (second-stage heat treatment step).

In particular, it is important that the draw ratio in the longitudinal direction and the draw ratio in the width direction are each increased within a range as described later, and the film is subjected to the first-stage heat treatment and the second-stage heat treatment.

For the biaxially oriented polypropylene film according to the present invention, it is important that the thermal shrinkage ratio in the film width direction in a heating treatment at 120°C for 15 minutes is 1.0% or less. When the thermal shrinkage ratio in the film width direction in the heating treatment at 120°C for 15 minutes is more than 1.0%, the film is poor in thermal dimensional stability, and the film itself may be shrunk by heat particularly in the capacitor production process and use process to deteriorate voltage resistance due to poor contact with an element end metallikon, leading to poor reliability. From the above-described point of view, the thermal shrinkage ratio in the film width direction in the heating treatment at 120°C for 15 minutes is more preferably 0.8% or less, further preferably 0.6% or less. The lower limit of the thermal shrinkage ratio is not particularly limited, but when the film is excessively expanded, the rolled state of the element may slack by heat in the capacitor production process and use process, and therefore the lower limit of the thermal shrinkage ratio is preferably -1.0%. Here, as a method for performing control so that the thermal shrinkage ratio in the film width direction in the heating treatment at 120°C for 15 minutes falls within a range as described above, for example, raw materials to be used, the draw ratios in the longitudinal direction and the width direction, and the stretching temperature are each controlled to fall within a range as described later, or in heat treatment and relaxation treatment steps after the film is biaxially stretched (biaxially oriented), the film is first heat-treated at a temperature lower than the stretching temperature in the width direction (first-stage heat treatment step), and the film is then heat-treated at a temperature higher than the above-mentioned treatment temperature and lower than the stretching temperature in the width direction during biaxial stretching (second-stage heat treatment step).

For ensuring that the biaxially oriented polypropylene film according to the present invention exhibits element processability and further increased heat resistance as a capacitor while process conditions require a higher temperature in preparation of capacitors, the thermal shrinkage ratio in the film longitudinal direction in the heating treatment at 120°C for 15 minutes is preferably 3.0% or less, more preferably 2.5% or less, further preferably 2.0% or less. When the thermal shrinkage ratio is more than 3.0%, the film is poor in thermal dimensional stability, and has a large thermal deformation amount particularly at a high temperature, and the film itself may be shrunk by heat in the capacitor production process and use process to generate gaps between films, so that voltage resistance may be reduced. The lower limit of the thermal shrinkage ratio is not particularly limited, but when the film is excessively expanded, the rolled state of the element may slack by heat in the capacitor production process and use process, and therefore the lower limit of the thermal shrinkage ratio is preferably -1.0%. Here, the thermal shrinkage ratio in the film longitudinal direction in the heating treatment at 120°C for 15 minutes can be controlled to fall within a range as described above by, for example, performing control so that raw materials to be used, the draw ratios in the longitudinal direction and the width direction, the stretching temperature, and the conditions in two-stage heat treatment and relaxation treatment steps after biaxial stretching each fall within a range as described later.

The puncture elongation of the biaxially oriented polypropylene film according to the present invention is preferably 2.0 mm or more, more preferably 2.1 mm or more, further preferably 2.2 mm or more. When the puncture elongation is less than 2.0 mm, the film is easily pierced in case of ingress of foreign matters, so that a short-circuit may occur, and thus there is a possibility of causing capacity reduction and short-circuit breakage when the film is used as a capacitor. The upper limit of the puncture elongation is not particularly limited, but it is practically 3.0 mm. Here, the puncture elongation can be controlled to fall within a range as described above by, for example, performing control so that raw materials to be used, the draw ratios in the longitudinal direction and the width direction, the stretching temperature, and the conditions in the first-stage heat treatment step, the second-stage heat treatment step and the relaxation treatment step after biaxial stretching each fall within a range as described later.

The Young's modulus of the biaxially oriented polypropylene film of the present invention in the width direction is preferably 5.0 GPa or more, more preferably 5.3 GPa or more, further preferably 5.5 GPa or more. When the Young's modulus in the width direction is less than 5.0 GPa, the problem may arise that the voltage resistance of the film is reduced, a winding performance failure occurs such that the film is creased in a step of forming a metal layer by vapor deposition, and capacitor element winding processing, or creases cause ingress of air to reduce the voltage resistance of the capacitor. The upper limit of the Young's modulus is not particularly limited, but when the Young's modulus in the width direction is excessively high, film formability may be impaired to cause film breakage etc., leading to poor productivity, and therefore the upper limit of the Young's modulus is 8.0 GPa. Here, the Young's modulus in the width direction can be controlled to fall within a range as described above by, for example, performing control so that raw materials to be used, the draw ratios in the longitudinal direction and the width direction, the stretching temperature, and the conditions in the first-stage heat treatment step, the second-stage heat treatment step and the relaxation treatment step after biaxial stretching each fall within a range as described later.

In the biaxially oriented polypropylene film according to the present invention, the loss tangent at 23°C ($\tan\delta23$) in the film width direction in solid viscoelasticity measurement is 0.08 or less. The loss tangent ($\tan\delta$) is a ratio of a storage elastic modulus (E') and a loss elastic modulus (E") which is obtained in solid viscoelasticity measurement. The loss tangent is a coefficient derived from ($\tan\delta$) = (E")/(E'). In other words, a small loss tangent ($\tan\delta$) suggests that molecular mobility is suppressed, and when the film is used as a capacitor, an effect of improving high-temperature voltage resistance and reliability as capacitor characteristics is easily obtained. The value of ($\tan\delta23$) is more preferably 0.07 or less, further preferably 0.063 or less. The lower limit of ($\tan\delta23$) is not particularly limited, but it is preferably 0.01. When the value of ($\tan\delta23$) is to be made less than 0.01, it is necessary to increase the draw ratio during film formation, and in this case, a problem may arise in terms of film formation stability such that breakage is induced. Here, the loss tangent at 23°C ($\tan\delta23$) in the film width direction can be made not more than 0.08 by, for example, performing control so that raw materials to be used, the draw ratios in the longitudinal direction and the width direction, the stretching temperature, and the conditions in the first-stage heat treatment step, the second-stage heat treatment step and the relaxation treatment step after biaxial stretching each fall within a range as described later.

The biaxially oriented polypropylene film according to the present invention is excellent in voltage resistance at a high temperature, and is therefore useful for general capacitors of usually 15 μm or less as a matter of course, and suitable particularly for use in thin-film heat-resistant film capacitors required in automobile applications (including hybrid car applications), which are used under a high-temperature environment. Particularly, the film thickness is preferably not less than 0.5 μm and not more than 5 μm, more preferably not less than 0.5 μm and not more than 3.0 μm, further preferably not less than 0.8 μm and not more than 2. 8 μm. Here, the film thickness can be controlled to fall within a range as described above by, for example, performing control so that the extrusion conditions and draw ratio, and the conditions in the first-stage heat treatment step, the second-stage heat treatment step and the relaxation treatment step after biaxial stretching each fall within a range as described later.

Linear polypropylene that is preferably used in the biaxially oriented polypropylene film according to the present invention will now be described. Linear polypropylene is usually used in packaging materials and capacitors, and is preferably polypropylene having a cold xylene-soluble content (hereinafter, referred to as CXS) of 4% by mass or less, and a mesopentad fraction of 0.95 or more. When these conditions are not satisfied, film formation stability may be deteriorated, or voids may be formed in a film in production of a biaxially oriented film, so that thermal dimensional stability and voltage resistance may be considerably deteriorated.

Here, the cold xylene-soluble content (CXS) refers to a polypropylene component which is dissolved in xylene when a film is fully dissolved in xylene, and then precipitated at room temperature, and this component may correspond to a component which is hard to be crystallized because it has low stereoregularity, a low molecular weight or the like. When such a component is contained in a large amount in a resin, the problem may arise that the film has poor thermal dimensional stability, and the dielectric breakdown voltage is reduced. Accordingly, the cold xylene-soluble content (CXS) is preferably 4% by mass or less, further preferably 3% by mass or less, especially preferably 2% by mass or less. For obtaining linear polypropylene having a cold xylene-soluble content (CXS) as described above, a method can be used such as a method in which the catalytic activity in preparation of a resin is enhanced, or a method in which the resulting resin is washed with a solvent or a propylene monomer itself.

From the same point of view, the mesopentad fraction of linear polypropylene is preferably 0.95 or more, further preferably 0.97 or more. The mesopentad fraction is an index showing stereoregularity of a polypropylene crystal phase as measured by a nuclear magnetic resonance method (NMR method), and this value is preferably high because higher the value, higher the melting point, mechanical strength and dielectric breakdown voltage of polypropylene. The upper limit of the mesopentad fraction is not particularly specified. For obtaining a resin having high stereoregularity as described above, a method in which the resulting resin powder is washed with a solvent such as n-heptane, a method in which a catalyst and/or a co-catalyst, and a composition are appropriately selected, or the like is preferably employed.

The linear polypropylene has a melt flow rate (MFR) of more preferably 1 to 10 g/10 minutes (230°C, load: 21.18 N), especially preferably 2 to 5 g/10 minutes (230°C, load: 21.18 N) from the viewpoint of film formability. For the melt flow rate (MFR) to fall within a range as described above, a method in which an average molecular weight or a molecular weight distribution is controlled, or the like is employed.

The linear polypropylene is mainly composed of a homopolymer of propylene, and may contain a copolymerization component from other unsaturated hydrocarbon, etc., or may be blended with a polymer that is not a homopolymer of propylene within the bounds of not hindering the purpose of the present invention. Examples of the monomer component that forms a copolymerization component or a blend as described above include ethylene, propylene (in the case of a copolymerized blend), 1-butene, 1-pentene, 3-methylpentene-1,3-methylbutene-1,1-hexene, 4-methylpentene-1,5-ethylhexene-1,1-octene, 1-decene, 1-dodecene, vinylcyclohexane, styrene, allylbenzene, cyclopentene, norbornene and 5-methyl-2-norbornene. The copolymerization amount or blend amount is preferably less than 1 mol% for the copolymerization amount, and less than 10% by mass for the blend amount from the viewpoint of the dielectric breakdown resistance characteristic and thermal dimensional stability.

Various additives, for example nucleating agents, antioxidants, heat stabilizers, lubricants, antistatic agents, antiblocking agents, fillers, viscosity modifiers and coloring inhibitors may be included in the linear polypropylene within the bounds of not hindering the purpose of the present invention.

Selection of the type and added amount of the antioxidant, among the above-mentioned additives, is important from the viewpoint of long-term heat resistance. Specifically, such antioxidants are preferably phenol-based antioxidants with steric hindrance, at least one of which is a high-molecular-weight-type antioxidant having a molecular weight of 500 or more. Specific examples thereof include various kinds of antioxidants, and it is preferable that for example, 2,6-di-t-butyl-p-cresol (BHT; molecular weight: 220.4) is used in combination with 1,3,5-trimethyl-2,4,6-tris(3,5-di-t-butyl-4-hydroxybenzyl)b enzene (e.g. Irganox (registered trademark) 1330 manufactured by BASF Company; molecular weight: 775.2), tetrakis[methylene-3-(3,5-di-t-butyl-4-hydroxyphenyl)propio nate]methane (e.g. Irganox (registered trademark) 1010 manufactured by BASF Company; molecular weight: 1177.7), or the like. The total content of these antioxidants is preferably 0.03 to 1.0% by mass based on the total amount of polypropylene. When the amount of the antioxidants is excessively small, the film may be poor in long-term heat resistance. When the amount of the antioxidants is excessively large, the capacitor element may be negatively influenced by blocking under a high temperature due to bleed-out of the antioxidants. The content of the antioxidants is preferably 0.1 to 0.9% by mass, especially preferably 0.2 to 0.8% by mass.

The biaxially oriented polypropylene film according to the present invention contains branched polypropylene (H) from the viewpoint of a high voltage characteristic, and when branched polypropylene (H) is added, the content thereof is preferably 0.05 to 10% by mass, more preferably 0.5 to 8% by mass, further preferably 1 to 5% by mass. When the biaxially oriented polypropylene film contains the branched polypropylene (H), the size of spherical crystals generated in a step of cooling a melt-extruded resin sheet can be controlled to be small, and generation of insulating defects that are generated in a stretching step can be kept low to obtain a polypropylene film excellent in voltage resistance.

Further, it is preferable that the film according to the present invention is composed of a mixture of linear polypropylene and the branched polypropylene (H). Here, the branched polypropylene (H) is especially preferably branched polypropylene (H) in which the melt tension (MS) and the melt flow rate (MFR) as measured at 230°C satisfy the relational expression of $\log(MS) > -0.56 \log(MFR) + 0.74$.

For obtaining branched polypropylene (H) in which the melt tension (MS) and the melt flow rate (MFR) as measured at 230°C satisfy the relational expression of $\log(MS) > -0.56 \log(MFR) + 0.74$, a method including blending polypropylene containing a large amount of a high-molecular-weight component; a method including blending an oligomer or polymer having a branched structure; a method including introducing a long-chain branched structure into a polypropylene molecule as described in Japanese Patent Laid-open Publication No. S62-121704; a method as described in Japanese Patent Publication No. 2869606; or the like is preferably used.

Here, the melt tension as measured at 230°C is one measured in conformity to the melt flow rate (MFR) measurement shown in JIS-K7210 (1999). Specifically, in a melt tension tester manufactured by Toyo Seiki Seisaku-Sho, Ltd., polypropylene is heated to 230°C, molten polypropylene is discharged at an extrusion rate of 15 mm/minute to obtain a strand, and a tension at the time of taking up the strand at a rate of 6.4 m/minute is measured, and defined as a melt tension (unit: cN). The melt flow rate (MFR) as measured at 230°C is one measured under a load of 21.18 N in conformity to JIS-K7210 (1999) (unit: g/10 minutes) .

The branched polypropylene (H) is not particularly limited although it is preferably one that satisfies the above-mentioned expression, and from the viewpoint of film formability, the melt flow rate (MFR) is preferably 1 to 20 g/10 minutes, more preferably 1 to 10 g/10 minutes. The melt tension is preferably 1 to 30 cN, more preferably 2 to 20 cN. The branched polypropylene (H) mentioned here is polypropylene having 5 or less internal trisubstituted olefins per 10,000 carbon atoms. Existence of the internal trisubstituted olefin can be determined by a proton ratio in a $^1$H-NMR spectrum.

In the present invention, a nucleating agent can be added within the bound of not contradicting the purpose of the present invention. As mentioned above, the branched polypropylene (H) itself has an $\alpha$-crystal or $\beta$-crystal nucleating agent effect, but other types of $\alpha$-crystal nucleating agents (dibenzylidene sorbitols, sodium benzoate and so on), and $\beta$-crystal nucleating agents (potassium 1,2-hydroxystearate, magnesium benzoate, amide-based compounds such as N,N'-dicyclohexyl-2,6-naphthalenedicarboxamide, quinacridone-based compounds and so on) are shown as examples. However, excessive addition of the other types of nucleating agents may cause deterioration of stretchability and reduction of voltage resistance due to void formation etc., and therefore the added amount thereof is usually 0.5% by mass or less, preferably 0.1% by mass or less, further preferably 0.05% by mass or less.

The biaxially oriented polypropylene film according to the present invention is preferably used as a dielectric film for capacitors, but is not limited to a capacitor type. Specifically, the biaxially oriented polypropylene film may be used for either foil-rolled capacitors or metal vapor deposition film capacitors in terms of an electrode structure, or for oil-impregnated capacitors impregnated with an insulating oil, or dry capacitors which do not include an insulating oil at all. The biaxially oriented polypropylene film may be of wound type or laminated type in terms of a shape. However, the biaxially oriented polypropylene film is preferably used particularly as a metal vapor deposition film capacitor in view of the characteristics of the film according to the present invention.

Since a polypropylene film usually has low surface energy, and is thus hard to be subjected to metal vapor deposition stably, it is preferable to subject the polypropylene film to a surface treatment before vapor deposition for the purpose of improving the metal adhesion strength. Specific examples of the surface treatment include a corona discharge treatment, a plasma treatment, a glow treatment and a flame treatment. The surface wet tension of a polypropylene film is usually about 30 mN/m, but it is preferable that the polypropylene film is made to have a wet tension of 37 to 50 mN/m, preferably about 39 to 48 mN/m by the surface treatment because excellent adhesion with a metal layer is obtained, and the preservation property is improved.

The biaxially oriented polypropylene film according to the present invention is obtained by performing biaxial stretching while using raw materials capable of imparting the above-mentioned characteristics. The biaxial stretching method may be any of an inflation simultaneous biaxial stretching method, a tenter simultaneous biaxial stretching method and a tenter sequential biaxial stretching method, and among them, a tenter sequential biaxial stretching method is preferably employed in view of controlling film formation stability, thickness uniformity, film puncture strength and thermal dimensional stability.

A method for producing the biaxially oriented polypropylene film according to the present invention will now be described. First, a polypropylene resin is melted and extruded onto a support to obtain a polypropylene resin sheet, the polypropylene resin sheet is stretched in the longitudinal direction, then stretched in the width direction to be sequentially biaxially stretched, and then subjected to a heat treatment and a relaxation treatment to produce a biaxially oriented polypropylene film. Here, it is important that in the heat treatment and relaxation treatment steps after biaxial stretching, the film is first heat-treated at a temperature lower than the stretching temperature in the width direction (first-stage heat treatment step), and the film is then heat-treated at a temperature higher than the above-mentioned treatment temperature and lower than the stretching temperature in the width direction during biaxial stretching (second-stage heat treatment step). Hereinafter, this method will be described more in detail, but the method in the present invention is not limited thereto.

First, high-melt-tension polypropylene (branched polypropylene (H)) is blended with linear polypropylene, the resulting blend is melted and extruded, and caused to pass through a filter, then extruded from a slit-shaped mouthpiece at a temperature of 230 to 260°C, and solidified on a cooling drum controlled to a temperature of 60 to 110°C, so that an unstretched sheet is obtained. As a method for bringing the film into close contact with a casting drum, any of a static electricity application method, a close-contact method using a surface tension of water, an air knife method, a press roll method and an underwater casting method may be used, and an air knife method which ensures satisfactory flatness and is capable of controlling surface roughness is preferable. The temperature of the air knife is 0 to 100°C, preferably 20 to 70°C, the blown air speed is preferably 130 to 150 m/s, and it is preferable to employ a double tube structure for improving uniformity in the width direction. Preferably, the position of the air knife is appropriately adjusted so that air flows to the film formation downstream side to prevent vibrations of the film.

Next, the unstretched sheet is biaxially stretched to be biaxially oriented. First, the unstretched sheet is preheated by passing between rolls kept at 120 to 150°C, and subsequently the sheet is kept at a temperature of 130°C to 150°C, stretched at a draw ratio of 2 to 12 in the longitudinal direction, and cooled to room temperature. The draw ratio in the longitudinal direction is more preferably 9 to 12, further preferably 6 to 9. The stretching method and the draw ratio are not particularly limited, and are appropriately selected according to the characteristics of a polymer to be used.

The film uniaxially stretched in the longitudinal direction is then guided to a tenter, the end of the film is held by a clip, and the film is stretched at a draw ratio of 7 to 13 in the width direction at a temperature of 140 to 165°C. The draw ratio in the width direction is more preferably 9 to 12. When the draw ratio in the width direction is less than 7, voltage resistance may be reduced because the mechanical strength of the biaxially oriented polypropylene film in the width direction decreases, or thickness unevenness is worsened. On the other hand, when the draw ratio in the width direction is more than 13, the film may be easily broken to deteriorate productivity.

Here, the area ratio is preferably 40 or more. In the present invention, the area ratio is a value obtained by multiplying the draw ratio in the longitudinal direction by the draw ratio in the width direction. The area ratio is more preferably 50 or more, especially preferably 60 or more. When the area ratio is in a range as described above, an effect of increasing the puncture strength, improving the voltage resistance of the film, and improving the voltage resistance of the capacitor is obtained. The upper limit of the area ratio is not particularly limited, but it is preferably 200 or less from the viewpoint of film formation stability.

In the present invention, for increasing the rigidity of the film and reducing the thermal shrinkage ratio of the film to improve the voltage resistance characteristic of the film, it is important that in the subsequent heat treatment and relaxation treatment steps, a multistage type heat treatment is performed in the following manner: the film is subjected to a first-stage heat treatment at a temperature of not lower than 115°C and not higher than 140°C while the film is relaxed by 2 to 20% in the width direction with the film tensely held by a clip in the width direction, and the film is then subjected to a second-stage heat treatment at a temperature higher than the temperature in the first-stage heat treatment and lower than the width-direction stretching temperature with the film tensely held by the clip in the width direction.

The relaxation ratio in the relaxation treatment step is preferably 5 to 18%, more preferably 8 to 15% for improving thermal dimensional stability. When the relaxation ratio is more than 20%, the film may excessively slack in the tenter to crease a product, leading to occurrence of unevenness during vapor deposition. On the other hand, when the relaxation ratio is less than 2%, it may be unable to obtain sufficient thermal dimensional stability, thus causing capacity reduction and short-circuit breakage under a high-temperature use environment when the film is used as a capacitor. For increasing the puncture elongation of the film, the relaxation ratio is preferably 10% to 15%.

The first-stage heat treatment temperature is preferably not lower than 115°C and not higher than 140°C, more preferably not lower than 120°C and not higher than 138°C, further preferably not lower than 125°C and not higher than 135°C so that the molecular chain orientation during stretching can be maintained and the mechanical strength can be increased. A heat treatment temperature that is lower than 115°C may cause capacity reduction and short-circuit breakage in capacitor characteristics under a high-temperature environment. On the other hand, when the heat treatment temperature is higher than 140°C, the mechanical strength of the film may decrease because molecular chain orientation relaxation progresses. Particularly for increasing the Young's modulus of the film in the width direction, the first-stage heat treatment temperature is preferably 115 to 135°C, and the second-stage heat treatment temperature is preferably 120 to 145°C.

When the second-stage heat treatment temperature is higher than the first-stage heat treatment temperature and lower than the width-direction stretching temperature, a noncrystalline molecular chain with high mobility, which is not sufficiently relaxed in the first-stage heat treatment, can be relaxed. As a result, the thermal shrinkage ratio can be reduced while high rigidity is maintained. From this point of view, the second-stage heat treatment temperature is preferably not lower than [(first-stage heat treatment temperature) + 5°C] and not higher than [(width-direction stretching temperature) - 5°C], further preferably not lower than [(first-stage heat treatment temperature) + 8°C] and not higher than [(width-direction stretching temperature) - 8°C].

Preferably, the first-stage heat treatment step includes a heat treatment step and a relaxation treatment step as described above. In the first-stage heat treatment step, it is especially preferable that a heat treatment is performed while a relaxation treatment is performed. On the other hand, it is preferable that the second-stage heat treatment step includes a heat treatment step while it is preferable that the second-stage heat treatment step does not include a relaxation treatment step. In other words, it is preferable that a heat treatment step is included while it is preferable that a relaxation treatment step is not included in the second-stage heat treatment step. In other words, it is preferable that a heat treatment is performed while it is preferable that a relaxation treatment is not performed in the second-stage heat treatment step.

After passing through the multistage heat treatment, the film is caused to pass through a cooling step at 80 to 100°C, and guided to the outside of the tenter with the film tensely held by the clip in the width direction, the film end is released from the clip, and in the winder step the film is slit at the edge and wound up as a film product roll. Here, it is preferable that before the film is wound up, a surface to be metallized is subjected to a corona discharge treatment in air, nitrogen, a carbon dioxide gas or a mixed gas thereof for improving adhesion with a metal to be vapor-deposited.

Production conditions that are particularly important for obtaining the film according to the present invention are the following conditions.

- The first-stage heat treatment temperature is not lower than 115°C and not higher than 140°C.
- The first-stage heat treatment temperature is lower than the width-direction stretching temperature.
- The second-stage heat treatment temperature is higher than the first-stage heat treatment temperature.
- The film is relaxed by 5 to 16% in the first-stage heat treatment step.

It is more preferable that in addition, the following condition is satisfied.

- The area ratio is 40 or more (especially preferably 60 or more).

A metal layer lamination film produced using the biaxially oriented polypropylene film according to the present invention, and a film capacitor using the metal layer lamination film will now be described.

The metal layer lamination film according to the present invention is a metal layer lamination film in which a metal layer is provided on at least one surface of the biaxially oriented polypropylene film according to the present invention.

In the present invention, the method for obtaining a metal layer lamination film by providing a metal layer on a surface of the biaxially oriented polypropylene film as described above is not particularly limited, and for example, a method is preferably used in which on at least one surface of a polypropylene film, aluminum is vapor-deposited to provide a metal layer such as an aluminum vapor deposition film which serves as an internal electrode of a film capacitor. Here, other metal components such as, for example, nickel, copper, gold, silver, chromium and zinc can be vapor-deposited simultaneously with or successively to aluminum. A protective layer can be provided on a vapor deposition film using an oil or the like.

In the present invention, the metal layer lamination film can be annealed or heat-treated at a specific temperature as necessary after formation of the metal layer. For insulation or other purposes, at least one surface of the metal layer lamination film can be coated with polyphenylene oxide, etc.

The film capacitor according to the present invention is a film capacitor produced using a metal layer lamination film obtained in this manner. Specifically, a film capacitor can be obtained by laminating or rolling the metal layer lamination film according to the present invention using various methods. An example of a preferred method for producing a rolled film capacitor is as follows.

Aluminum is vapor-deposited on one surface of a polypropylene film under a reduced pressure. Here, aluminum is vapor-deposited in a stripe shape having margin sections running in the film longitudinal direction. Next, the film is slit with a blade put to the center of each vapor deposition section and to the center of each margin section on a surface, so that tape-shaped winding reels with a surface having a margin on one side are prepared. In this way, tape-shaped winding reels having a margin on the left or on the right are prepared, and one tape-shaped winding reel having a margin on the left and one tape-shaped winding reel having a margin on the right are rolled with the two sheets overlapping each other in such a manner that the vapor deposition section protrudes from the margin section in the width direction, so that a rolled body is obtained.

When aluminum is vapor-deposited on both surfaces, aluminum is vapor-deposited in a stripe shape having margin sections running in the longitudinal direction on one surface, and on the other surface, aluminum is vapor-deposited in a stripe shape in such a manner that margin sections in the longitudinal direction are each situated at the center of the back-side vapor deposition section. Next, the film is slit with a blade put to the center of each margin section on each of the front and back surfaces, so that tape-shaped winding reels with both surfaces each having a margin on one side (e.g. the front surface has a margin on the right side, and the back surface has a margin on the left side) are prepared. One of the obtained reels and one non-deposited mate film are rolled with the two sheets overlapping each other in such a manner that the metallized film protrudes from the mate film in the width direction, so that a rolled body is obtained.

A core material is removed from the rolled body prepared in the manner described above, the rolled body is pressed, a metallikon is thermally sprayed to both end surfaces to obtain an external electrode, and a lead is welded to the metallikon to obtain a rolled film capacitor. Film capacitors are used in a wide range of applications including railway vehicles, automobiles (e.g. hybrid cars and electric cars), solar power generation/wind power generation applications and general consumer electrical appliances, and the film capacitor according to the present invention can also be suitably used in these applications.

Methods for measurement of characteristic values and methods for evaluation of effects in the present invention are as follows.

(1) Film thickness

The thickness of a biaxially oriented polypropylene film was measured at randomly selected total ten spots under a 23°C and 65% RH atmosphere using a contact-type electronic micrometer (model: K-312A) manufactured by Anritsu Corporation, and the average thereof was defined as a film thickness of the biaxially oriented polypropylene film.

(2) Puncture strength of film

A test piece (80 mm (width) × 80 mm (length)) obtained by cutting a biaxially oriented polypropylene film was set on a stage of a handy compression tester KES-G5 manufactured by KATO TECH CO., LTD. in such a manner that the film would not slack. The test piece was punctured at a rate of 2 mm/sec using a needle with a leading end radius R of 1 mm, a load at the time when the needle passed through the test piece was read, the load was divided by the film thickness of the test piece, and the value thus obtained was defined as a puncture strength (g/$\mu$m). The measurement

was made five times for each sample, and based on the average thereof, evaluation was performed.

For the film thickness to be used for calculation of the puncture strength, a value measured in (1) was used.

(3) Puncture elongation of film

A test piece (80 mm (width) × 80 mm (length)) obtained by cutting a biaxially oriented polypropylene film was set on a stage of a handy compression tester KES-G5 manufactured by KATO TECH CO., LTD. in such a manner that the film would not slack. The test piece was punctured at a rate of 2 mm/sec using a needle with a leading end radius R of 1 mm, an elongation at the time when the needle passed through the test piece was read, and the elongation was defined as a puncture elongation (mm) . The measurement was made five times for each sample, and based on the average thereof, evaluation was performed.

(4) Thermal shrinkage ratio in heating treatment at 120°C for 15 minutes

Five samples each having a width (short side) of 10 mm and a length (long side) of 200 mm (measurement direction) were cut out in each of the longitudinal direction and the width direction of a biaxially oriented polypropylene film. Specifically, five samples for measurement of the thermal shrinkage ratio in the longitudinal direction were cut out in such a manner that the longitudinal direction of the biaxially oriented polypropylene film coincided with the long side direction (measurement direction) of the sample. Similarly, five samples for measurement of the thermal shrinkage ratio in the width direction were cut out in such a manner that the width direction of the biaxially oriented polypropylene film coincided with the long side direction (measurement direction) of the sample.

The sample was marked at positions of 25 mm from both ends so as to obtain a test length of about 150 mm, the distance between the marks was measured using a universal projector (V-16A) manufactured by Nikon Corporation, and the distance was defined as a test length ($l_0$). Next, the sample was sandwiched by a paper, and heated for 15 minutes in a no-load state in an oven kept at 120°C, the sample was then taken out, and cooled at room temperature, the size ($l_1$) was then measured to determine the thermal shrinkage ratio from the following equation, and the average for five samples was defined as a thermal shrinkage ratio.

$$\texttt{Thermal shrinkage ratio = \{(l_0-l_1) / l_0\} × 100 (\%)}$$

Specifically, thermal shrinkage ratios obtained using five samples for measurement of the thermal shrinkage ratio in the longitudinal direction were averaged, and the thus-obtained average was defined as a thermal shrinkage ratio in the longitudinal direction. Similarly, thermal shrinkage ratios obtained using five samples for measurement of the thermal shrinkage ratio in the width direction were averaged, and the average thus obtained was defined as a thermal shrinkage ratio in the width direction.

(5) Young's modulus in width direction

The Young's modulus was measured in conformity with the measurement method specified in JIS K7127 (1999). A biaxially oriented polypropylene film was cut in the width direction to a rectangular shape having a length of 150 mm (long side) × a width of 10 mm (short side), and the piece thus obtained was used as a sample. Specifically, the sample was cut out in such a manner that the width direction of the biaxially oriented polypropylene film coincided with the long side direction of the sample. A tension test was conducted in the width direction of the film with the initial inter-chuck distance set to 50 mm and the tension speed set to 300 mm/minute using a tension tester (Tensilon UCT-100 manufactured by ORIENTEC CORPORATION) under a 23°C and 65% RH atmosphere. The measurement was made five times for each sample, and the average thereof was determined.

(6) Loss tangent at 23°C (tan$\delta$23)

The loss tangent was measured under the following conditions. A test piece (having a width of 5 mm (short side) and a length of 20 mm (long side)) cut out from a biaxially oriented polypropylene film with the film width direction as a long side direction was attached to an apparatus chuck section under a 23°C atmosphere, and temporarily cooled to -60°C, and measurement was started at the time when the temperature reached -50°C after the start of elevation of the temperature. A viscoelasticity-temperature curve was drawn in accordance with a dynamic viscoelasticity method, a storage elastic modulus (E'23) and a loss elastic modulus (E''23) at 23°C were each read, and the loss tangent at 23°C (tan$\delta$23) was calculated from the following equation.

$$(\tan\delta 23) = (E''23) / (E'23)$$

| Apparatus | : Rheogel-E4000 (manufactured by UBM Ltd.) |
|---|---|
| Geometry | : Tension |
| Inter-chuck distance | : 10 mm |
| Frequency | : 10Hz |
| Distortion | : 0.1 to 0.2% |
| Temperature range | : -50 to 150°C |
| Temperature elevationrate | : 3°C/minute |
| Measurement atmosphere | : nitrogen |

(7) Evaluation of vapor deposition capacitor characteristics (voltage resistance and reliability)

On a film obtained in each of examples and comparative examples as described later, aluminum was vapor-deposited in a vacuum vapor deposition machine manufactured by ULVAC, Inc. to form a vapor deposition pattern including so-called a T-shaped margin pattern having a film resistance of 8 $\Omega$/sq and provided with a margin section in a direction vertical to the longitudinal direction, so that a vapor deposition reel having a width of 50 mm was obtained.

Using the reel, a capacitor element was then wound up by an element winder (KAW-4NHB) manufactured by KAIDO MFG. CO., LTD., and was subjected to metallikon, and then heat-treated at a temperature of 105°C for 10 hours, and a lead was attached to finish the capacitor element.

Using ten capacitor elements prepared in this manner, so-called a step-up test was conducted, the step-up test including repeating a process in which a voltage of 300 VDC is applied to the capacitor element at a high temperature of 105°C, and after elapse of 10 minutes with the same voltage, the applied voltage is gradually increased stepwise at a rate of 50 VDC/minute. A change in electrostatic capacity here was measured and plotted on a graph, a voltage at which the capacity decreased to 70% of the initial value was divided by the film thickness measured in (1), and the value thus obtained was defined as a voltage resistance (V/$\mu$m). The voltage was increased until the electrostatic capacity decreased to 10% or less of the initial value, the capacitor element was then disassembled to examine the state of rupture, and the preservation property (reliability) was evaluated as below.

AA: The element shape is not changed, and piercing rupture is not observed.
A: The element shape is not changed, and piercing rupture is observed in 10 or less film layers.
B: The element shape is changed, or piercing rupture is observed in more than 10 film layers.
C: The element shape is ruptured.
AA shows that the capacity element can be used without problems, and A shows that the capacity element can be used depending on conditions. B and C show that there arises a problem in practical use.

EXAMPLES

Hereinafter, the effect of the present invention will be further described by way of examples.

(Example 1)

1.0% by mass of a branched polypropylene resin (high-melt-tension polypropylene Profax PF-814) manufactured by Basell Company was blended with linear polypropylene: a polypropylene resin manufactured by Prime Polymer Co., Ltd., which had a mesopentad fraction of 0.985 and a melt flow rate (MFR) of 2.6 g/10 minutes. The resulting blend was fed into an extruder at a temperature of 260°C, and melted and extruded in a sheet shape from a T-shaped slit die at a resin temperature of 260°C, and the molten sheet was brought into close contact with a casting drum kept at 90°C using an air knife, so that the molten sheet was cooled and solidified to obtain an unstretched sheet. The sheet was then gradually preheated to 140°C by a plurality of rolls, subsequently kept at a temperature of 145°C, and caused to pass between rolls having a circumferential speed difference, so that the sheet was stretched at a draw ratio of 5.2 in the longitudinal direction. Subsequently, the film was guided to a tenter, stretched at a draw ratio of 10 in the width direction at a temperature of 160°C, then heat-treated at 130°C while being relaxed by 10% in the width direction as a first-stage heat treatment and relaxation treatment, and further heat-treated at 140°C while being held by a clip in the width direction as a second-stage heat treatment. Thereafter, the film was caused to pass through a cooling step at 100°C, and guided to the outside of the tenter, the film end was released from the clip, a surface of the film (casting drum contact side) was then subjected to a corona discharge treatment in the air at a treatment intensity of 25 W•min/m$^2$, and a film having a film thickness of 2.7 μm was wound up as a film roll.

(Examples 2 to 5 and Comparative Examples 1 to 3)

Except that the heat treatment temperature and conditions for the relaxation treatment after biaxial stretching were changed as described in Table 1, the same procedure as in Example 1 was carried out to prepare a biaxially stretched polypropylene film.

(Example 6)

After an unstretched sheet was prepared in the same manner as in Example 1, the sheet was gradually preheated to 140°C by a plurality of rolls, subsequently kept at a temperature of 140°C, and caused to pass between rolls having a circumferential speed difference, so that the sheet was stretched at a draw ratio of 6.0 in the longitudinal direction. Subsequently, the film was guided to a tenter, stretched at a draw ratio of 11 in the width direction at a temperature of 162°C, then heat-treated at 132°C while being relaxed by 12% in the width direction as a first-stage heat treatment and relaxation treatment, and further heat-treated at 145°C while being held by a clip in the width direction as a second-stage heat treatment. Thereafter, the film was caused to pass through a cooling step at 100°C, and guided to the outside of the tenter, the film end was released from the clip, a surface of the film (casting drum contact side) was then subjected to a corona discharge treatment in the air at a treatment intensity of 25 W•min/m$^2$, and a film having a film thickness of 4.9 μm was wound up as a film roll.

The characteristics of biaxially oriented polypropylene films and capacitors obtained in examples and comparative examples are shown in Table 1.

[Table 1]

| | | Example 1 | Example 2 | Example 3 | Example 4 | Example 5 | Example 6 | Comparative Examples 1 | Comparative Examples 2 | Comparative Examples 3 |
|---|---|---|---|---|---|---|---|---|---|---|
| Stretching temperature in width direction | (°C) | 160 | 160 | 163 | 160 | 160 | 162 | 160 | 160 | 160 |
| First-stage heat treatment temperature | (°C) | 130 | 120 | 130 | 130 | 137 | 132 | 130 | 130 | 156 |
| Relaxation ratio in first-stage heat treatment step | (%) | 10 | 10 | 16 | 5 | 10 | 12 | 0 | 8 | 13 |
| Second-stage heat treatment temperature | (°C) | 140 | 140 | 140 | 140 | 143 | 145 | 140 | 90 | 160 |
| Puncture strength | (g/$\mu$m) | 83 | 89 | 78 | 85 | 73 | 33 | 81 | 78 | 68 |
| Heat shrinkage ratio at 120°C for 15 minutes in width direction | (%) | 0.2 | 0.7 | -0.2 | 0.8 | 0.1 | 0.6 | 3.5 | 1.5 | -0.4 |
| Heat shrinkage ratio at 120°C for 15 minutes in longitudinal direction | (%) | 1.6 | 1.4 | 3.1 | 1.3 | 1.4 | 2.6 | 1.7 | 2.1 | 1.3 |
| Puncture elongation | (mm) | 2.3 | 2.4 | 2.1 | 1.8 | 2.5 | 2.6 | 2.1 | 1.9 | 2.4 |
| Young's modulus in width direction | (GPa) | 5.7 | 5.4 | 5.2 | 5.9 | 4.8 | 5.8 | 6.2 | 5.8 | 4.3 |
| (tan$\delta$23) | (-) | 0.062 | 0.069 | 0.064 | 0.069 | 0.070 | 0.053 | 0.083 | 0.078 | 0.081 |
| Film thickness | ($\mu$m) | 2.5 | 2.4 | 2.6 | 2.5 | 2.4 | 4.9 | 2.4 | 2.5 | 2.6 |
| Voltage resistance of capacitor at 105°C | (V/$\mu$m) | 557 | 535 | 529 | 498 | 488 | 583 | 403 | 425 | 398 |
| Reliability of capacitor at 105°C | | AA | A | A | A | A | AA | C | B | C |

## Claims

1. A biaxially oriented polypropylene film containing branched polypropylene, **characterized in that** the puncture strength of the film is 70 g/$\mu$m or more, the thermal shrinkage ratio in the film width direction in a heating treatment at 120°C for 15 minutes is 1.0% or less, the loss tangent at 23°C in the film width direction, tan$\delta$23 being the ratio of a storage elastic modulus E' and a loss elastic modulus E" in solid viscoelasticity measurement, is 0.08 or less, the puncture strength, thermal shrinkage ratio and the loss tangent are measured as described in the specification.

2. The biaxially oriented polypropylene film according to claim 1, wherein the thermal shrinkage ratio in the film longitudinal direction in a heating treatment at 120°C for 15 minutes is 3% or less.

3. The biaxially oriented polypropylene film according to claim 1 or 2, wherein the puncture elongation of the film is 2.0 mm or more.

4. The biaxially oriented polypropylene film according to any one of claims 1 to 3, wherein the Young's modulus in the film width direction is 5.0 GPa or more.

5. The biaxially oriented polypropylene film according to any one of claims 1 to 4, wherein the film thickness is not less than 0.5 $\mu$m and not more than 5 $\mu$m.

6. A metal layer lamination film in which a metal layer is provided on at least one surface of the biaxially oriented polypropylene film according to any one of claims 1 to 5.

7. A film capacitor which is produced using the metal layer lamination film according to claim 6.

## Patentansprüche

1. Biaxial gereckte Polypropylenfolie, die verzweigtes Polypropylen enthält, **dadurch gekennzeichnet, dass** die Durchstoßfestigkeit dieser Folie 70 g/$\mu$m oder mehr, die Wärmeschrumpfungsrate in der Folienbreitenrichtung bei einer 15-minütigen Wärmebehandlung bei 120 °C 1,0 % oder weniger und der Verlustfaktor bei 23 °C in der Folienbreitenrichtung tan$\delta$23, bei dem es sich um das Verhältnis zwischen einem Speicherelastizitätsmodul E' und einem Verlustelastizitätsmodul E" bei einer Viskoelastizitätsmessung am Festkörper handelt, 0,08 oder weniger beträgt; wobei die Durchstoßfestigkeit, die Wärmeschrumpfungsrate und der Verlustfaktor wie in der Beschreibung erläutert gemessen werden.

2. Biaxial gereckte Polypropylenfolie nach Anspruch 1, wobei die Wärmeschrumpfungsrate in der Folienlängsrichtung bei einer 15-minüten Wärmebehandlung bei 120 °C 3 % oder weniger beträgt.

3. Biaxial gereckte Polypropylenfolie nach Anspruch 1 oder 2, wobei die Durchstoßdehnung der Folie 2,0 mm oder mehr beträgt.

4. Biaxial gereckte Polypropylenfolie nach einem der Ansprüche 1 bis 3, wobei der Elastizitätsmodul in der Folienbreitenrichtung 5,0 GPa oder mehr beträgt.

5. Biaxial gereckte Polypropylenfolie nach einem der Ansprüche 1 bis 4, wobei die Filmdicke nicht weniger als 0,5 $\mu$m und nicht mehr als 5 $\mu$m beträgt.

6. Metallschichtlaminatfolie, in der eine Metallschicht auf zumindest einer Oberfläche einer biaxial gereckten Polypropylenfolie nach einem der Ansprüche 1 bis 5 bereitgestellt ist.

7. Folienkondensator, der unter Verwendung einer Metallschichtlaminatfolie nach Anspruch 6 hergestellt ist.

## Revendications

1. Film de polypropylène orienté biaxialement contenant du polypropylène ramifié, **caractérisé en ce que**

la résistance à la perforation du film est de 70 g/μm ou plus, le taux de rétreint thermique dans la direction de largeur du film dans un traitement de chauffage à 120°C pendant 15 minutes est de 1,0 % ou moins, la tangente de perte à 23°C dans la direction de largeur du film, tanσ23, étant le rapport d'un module d'élasticité de stockage E' et d'un module d'élasticité de perte E' dans une mesure de viscoélasticité solide, est de 0,08 ou moins, la résistance à la perforation, le taux de rétreint thermique et la tangente de perte étant mesurés comme décrit dans la description.

2. Film de polypropylène orienté biaxialement selon la revendication 1, dans lequel le taux de rétreint thermique dans la direction longitudinale du film dans un traitement de chauffage à 120°C pendant 15 minutes est de 3 % ou moins.

3. Film de polypropylène orienté biaxialement selon la revendication 1 ou 2, dans lequel l'allongement à la perforation est de 2,0 mm ou plus.

4. Film de polypropylène orienté biaxialement selon l'une quelconque des revendications 1 à 3, dans lequel le module de Young dans la direction de largeur du film est de 5,0 GPa ou plus.

5. Film de polypropylène orienté biaxialement selon l'une quelconque des revendications 1 à 4, dans lequel l'épaisseur de film n'est pas inférieure à 0,5 μm et pas supérieure à 5 μm.

6. Film de stratification de couche métallique dans lequel une couche métallique est prévue sur au moins une surface du film de polypropylène orienté biaxialement selon l'une quelconque des revendications 1 à 5.

7. Condensateur à film qui est produit en utilisant le film de stratification de couche métallique selon la revendication 6.

## REFERENCES CITED IN THE DESCRIPTION

**Patent documents cited in the description**

- US 20090186280 A
- JP 2001081221 A
- US 20110236762 A
- US 20120015229 A
- US 20030108775 A
- EP 2590191 A
- JP H0977882 B
- JP 2001105553 A
- JP H1167580 B
- JP H11273990 B
- WO 2004084242 A
- JP 2005064067 A
- JP 2007169595 A
- JP S62121704 B
- JP 2869606 B